# EUROPÄISCHE PATENTSCHRIFT

(11) **EP 3 172 577 B1**
(45) Veröffentlichungstag und Bekanntmachung des Hinweises auf die Patenterteilung: **14.10.2020**
(21) Anmeldenummer: 15732626.5
(22) Anmeldetag: 25.06.2015
(51) Int. Cl.: G01P 3/80, G01P 3/50, G01P 15/00

(54) **VERFAHREN UND VORRICHTUNG ZUR ERMITTLUNG DER ABSOLUTGESCHWINDIGKEIT EINES SCHIENENFAHRZEUGS**
METHOD AND DEVICE FOR DETERMINING THE ABSOLUTE SPEED OF A RAIL VEHICLE
PROCÉDÉ ET DISPOSITIF DE DÉTERMINATION DE LA VITESSE ABSOLUE D'UN VÉHICULE FERROVIAIRE

(30) Priorität: 23.07.2014 AT 505122014
(43) Veröffentlichungstag der Anmeldung: 31.05.2017
(73) Patentinhaber: Siemens Mobility Austria GmbH, 1210 Wien (AT)
(72) Erfinder: SALZGEBER, Gerard, 8045 Graz (AT)
(74) Vertreter: Deffner, Rolf
(86) Internationale Anmeldenummer: PCT/EP2015/064320
(87) Internationale Veröffentlichungsnummer: WO 2016/012188

(56) Entgegenhaltungen:
- EP-A2- 1 014 092
- DE-A1- 2 544 824
- DE-A1- 3 719 320
- DE-A1-102011 089 464
- US-A- 5 301 130
- US-A1- 2006 115 096
- US-A1- 2006 241 892
- Herbert Grünbacher: "Entwurf von FIR-Filtern", , 19 October 2010 (2010-10-19), pages 1-22, XP055481730, Retrieved from the Internet: URL:https://ti.tuwien.ac.at/cps/teaching/c ourses/sigproz/files/DesignFIR.pdf/@@downl oad/file/DesignFIR.pdf [retrieved on 2018-06-06]

## Beschreibung

### Technisches Gebiet

Die Erfindung betrifft eine Vorrichtung und ein Verfahren zur Ermittlung der Absolutgeschwindigkeit eines Schienenfahrzeugs, wobei bordseitig Sensoreinrichtungen und eine Signalverarbeitungs-Einrichtung vorgesehen ist.

### Neuer Stand der Technik

Bei Schienenfahrzeugen wird heutzutage üblicherweise die Geschwindigkeit dadurch ermittelt, indem man die Raddrehzahl mit einem Polrad und einem Polradsensor misst, das Sensorsignal einer Signalverarbeitungs-Einrichtung zuleitet und dort mit dem Radumfang multipliziert.

Bei dieser bekannten Methode bleibt außer Acht, dass der Radumfang keine fixe Größe ist, sondern sich während der Betriebsdauer durch Verschleiß oder Profilierung ändert. Auch ein Schlupf zwischen Schiene und Rad wird ebenfalls nicht berücksichtigt, was das Ergebnis weiter verfälscht. Insgesamt ist das Ergebnis der ermittelten Geschwindigkeit daher ungenau.

Aus dem Stand der Technik ist beispielsweise die US 5 301 130 A bekannt, welche ein System und ein Verfahren zur Bestimmung einer Fahrzeuggeschwindigkeit unabhängig von Rad-Winkelgeschwindigkeiten zeigt. Signale von zu unterschiedlichen Zeiten erfassten Störungen an einem vorderen Rad und einem hinteren Rad werden mittels eines adaptiven Algorithmus korreliert. Aus jener Zeitspanne, welche eine maximale Korrelation zwischen den Signalen ergibt, wird die Fahrzeuggeschwindigkeit bestimmt. Für den adaptiven Algorithmus wird ein iterativer Algorithmus mit Berechnung des Gradienten einer Fehlerfunktion eingesetzt.

In der DE 10 2011 089464 A1 ist ein Verfahren und eine Vorrichtung zur Bestimmung von Raddurchmessern bei Schienenfahrzeugen offenbart. Es werden ein erstes Beschleunigungssignal, ein zweites Beschleunigungssignal sowie ein Rotationsfrequenzsignal gemessen und Laufzeitdifferenzen bestimmt. Dadurch können Fahrzeug- und Radgeschwindigkeiten ermittelt werden, aus denen wiederum Raddurchmesser bestimmt werden.

Die Ermittlung von Laufzeitdifferenzen erfolgt mittels einer Kreuzkorrelationsfunktion.

Die DE 25 44 824 A1 zeigt ein adaptives Filter zur Überprüfung von Korrelationskoeffizienten bei einer Messung von Relativgeschwindigkeiten eines Objekts. Es werden dabei Signalkoinzidenzen quantisierter Signale gezählt.

Weiterhin ist in der US 2006/115096 A1 ein adaptives Verfahren zur Rauschunterdrückung beschrieben, das beispielsweise eingesetzt wird, um elektromagnetisches Rauschen oder Rauschen aufgrund von Vibrationen beispielsweise bei Antrieben von Digital Versatile Disc (DVD) - Laufwerken zu reduzieren.

### Darstellung der Erfindung

Vor diesem Hintergrund des Standes der Technik ist es eine Aufgabe der vorliegenden Erfindung eine Vorrichtung und ein Verfahren zur Messung der Absolutgeschwindigkeit eines Schienenfahrzeugs mit einer verbesserten Genauigkeit anzugeben.

Diese Aufgabe wird bezüglich des Verfahrens mit den Merkmalen des Anspruchs 1 und bezüglich der Vorrichtung mit den Merkmalen des Anspruchs 10 gelöst. Vorteilhafte Ausgestaltungen der Erfindung sind in den jeweils abhängigen Patentansprüchen definiert.

Die Erfindung geht von der Überlegung aus, dass der vom Rad befahrene Schienenkopf keine ideal glatte ebene Oberfläche darstellt, sondern dass während Rollbewegung jedes Rad aufgrund der Unebenheiten eine Vibrations-Anregung erfährt. Diese Anregung erfährt zunächst die in Fahrtrichtung vorne laufende Achse und - durch ein Zeitintervall verzögert -, die nachlaufende Achse eines Drehgestells. Dadurch entstehen zwei ähnliche Signalmuster, die sich im Wesentlichen durch einen Zeitversatz, welcher der Zeitdifferenz entspricht, die die Radscheiben benötigen, um einen markanten Punkt auf der Schiene zu überfahren, unterscheiden. Wertet man nun diese ähnlichen Signale mit einem zeitgemäßen Prozessorsystem aus, lässt sich die Zeitverschiebung sehr genau berechnen. Um charakteristische Verläufe in ähnlichen Signalen in Bezug zu setzen, sind verschiedene Methoden der Signalverarbeitung bekannt. Der Rest ist eine einfache Rechnung, da der Abstand zwischen den beiden Achsen eines Drehgestells oder auch zwischen aufeinanderfolgenden Drehgestellen im Schienenzug bekannt ist. Insgesamt lässt sich dadurch die Absolutgeschwindigkeit des Schienenfahrzeugs einfach und genau berechnen.

Um die Anregung der Achsen eines Radsatzes bzw. eines Rades messtechnisch zu erfassen, können verschiedene physikalische Größen herangezogen werden, wie zum Beispiel Wege, Geschwindigkeiten, Beschleunigungen oder davon abgeleitete Größen wie deren Differenzial oder Integral. Um diese physikalischen Größen bei einem Schienenfahrzeug zu erfassen, sind geeignete Sensoreinrichtungen bekannt. Unter einer Sensoreinrichtung ist dabei der Mess-Umformer mit der dazugehörigen signaltechnischen Aufbereitung eines signaltechnisch verarbeiteten Sensorsignals zu verstehen. Je nach Anordnung der Mess-Umformer ergibt sich eine richtungsabhängige Sensorgröße. Im Folgenden ist unter z-Richtung die bezüglich des Schienenstranges vertikale Richtung zu verstehen; y-Richtung bezeichnet eine zum Schienenstrang seitlich gerichtete laterale Richtung. Auf Grund der äquivalenten Konizität am Rad-Schiene-Berührungspunkt findet ein Übersprechen der Schienenanregung in z-Richtung (vertikal) zur Radsatzbewegung in y-Richtung (lateral) statt, weshalb die Mess-Richtung in z-Richtung und/oder in y Richtung sein kann. Die z-Richtung ist vorteilhafter, da diese die vertikale Schienenbewegung genauer abbildet, doch kann es durch gemeinsame Nutzung von Sensoren wirtschaftlich günstiger sein, die y-Richtung zur Geschwindigkeitsbestimmung heranzuziehen. Bahntaugliche Sensoreinrichtungen sind kommerziell verfügbar.

Um die Absolutgeschwindigkeit eines Schienenfahrzeugs zu ermitteln, weist das erfindungsgemäße Verfahren folgende Verfahrensschritte auf:
- Erfassen der Unebenheiten der Schiene jeweils von einem vorlaufenden Radsatz mittels einer ersten Sensoreinrichtung und zumindest an einem nachlaufenden Radsatz mittels einer weiteren Sensoreinrichtung;
- Übermitteln der von den Sensoreinrichtungen erzeugten Sensorsignale an eine Signalverarbeitungs-Einrichtung, welche dazu eingerichtet ist, durch eine Analyse der zugeleiteten Sensorsignale mit Hilfe eines adaptiven FIR-Filters (Finite Impulse Response-Filters) die Absolutgeschwindigkeit zu ermitteln, wobei hierfür die zeitliche Position des Betragsmaximum in den Filterkoeffizienten der geschätzten Übertragungsfunktionen zwischen den Sensorsignalen verwendet wird.

Aus Gründen der gemeinsamen Verwendung von Sensoren und/oder einer einfacheren Montage und/oder einer einfacheren Kabelführung kann es günstig sein, wenn die verwendeten Sensoren am Schienenfahrzeug an unterschiedlichen Orten platziert sind. Grundsätzlich geeignete Mess-Positionen sind jene an den Achslager, oder direkt über einer Primärfeder (paarweise über derselben Schiene), oder direkt über einer Sekundärfeder des Drehgestells. Die durch Vibrationen hervorgerufene Beschleunigung wird bevorzugt in z-Richtung erfasst. Im Allgemeinen sind die Beschleunigungen geringer, je weiter die Sensorik von der Achslagerposition (Anregungsort) entfernt ist, so dass im Nahbereich kostengünstigere Sensoren eingesetzt werden können. Andererseits wird die geschwindigkeitsabhängige Ähnlichkeit unauffälliger je weiter man sich von der Achslagerposition entfernt. Um diesen Effekt zu kompensieren kann man auf leistungsfähige Signalverarbeitungsmethoden zurückgreifen.

Es kann vorteilhaft sein, wenn zwei Sensoreinrichtungen jeweils an Achslagern von unterschiedlichen Radsätzen verwendet werden, die paarweise über derselben Schiene liegen. Dabei können die betrachteten Radsätze auch verschiedenen Drehgestellen zugehören. Von Bedeutung ist lediglich, dass der Abstand zwischen den Sensoren in Richtung der Schiene gesehen bekannt ist.

Es kann auch vorteilhaft sein, wenn die Anregung über beiden Schienen gleichzeitig mittels Achslagersensoren erfasst wird. Hierbei werden sowohl die Anregungen der rechten als auch der linken Schiene zur Bestimmung der Zeitverzögerung herangezogen, wodurch Genauigkeit und Robustheit gegenüber Störungen erhöht wird.

Es kann auch günstig sein, wenn die Sensoren jeweils über Primär-Federstufen platziert sind. Hierdurch können sich konstruktive und/oder wirtschaftliche Vorteile ergeben, insbesondere wenn Sensoren mit anderen Systemen gemeinsam genutzt werden. Hinsichtlich Verteilung der Sensoren auf die Drehgestelle sind dieselben Variationsmöglichkeiten wie bei der "Mess-Position Achslager" möglich.

Es ist auch möglich, die Sensoren auf den Rahmen von zwei oder mehreren verschiedenen Drehgestellen zu platzieren. Auch hier lässt sich eine geschwindigkeitsabhängige Zeitdifferenz aus den Anregungssignalen ermitteln. Der dabei zu berücksichtigende Abstand "A" ist dann der Abstand zwischen Drehgestell-Mitte des einen zur Drehgestell-Mitte des anderen Drehgestells der jeweils paarweise betrachteten Drehgestelle. Eine weitere Verbesserung lässt sich dadurch erreichen, indem zur Bestimmung der Absolutgeschwindigkeit eine Kombination von mehreren Drehgestell-Pärchen herangezogen wird, wodurch infolge eines Mittelungseffektes die Genauigkeit der Geschwindigkeitsmessung weiter verbessert werden kann.

In einer anderen bevorzugten Ausführung kann vorgesehen sein, dass die Sensoren im Wagenkasten oberhalb von zwei oder mehreren Drehgestellen platziert werden. Die Vorteile dieser Platzierung sind die vereinfachte Kabelführung und geringere mechanischen Anforderungen an die Sensoren, wodurch das System sich wirtschaftlicher realisieren lässt. Hinsichtlich Verteilung der Sensoren im Wagenkasten oberhalb der Drehgestelle sind dieselben Variationsmöglichkeiten wie bei der Mess-Position "Rahmen-Mitte" möglich.

Eine nicht erfindungsgemäße Methode zur Bestimmung des Zeitversatzes kann die Auswertung mittels Kreuzkorrelation sein. Eine deutliche Verbesserung lässt sich aber durch Methoden der Systemidentifikation erreichen, wie zum Beispiel die Systemidentifikation mithilfe von adaptiven Filtern, welche sich sehr gut zur Auswertung der vorliegenden Anregungssignale eignen. Mittels eines adaptiven Filters wird hierbei das Signal des einen Sensors mit Hilfe eines anderen Sensorsignals geschätzt. Bei einer gemeinsamen Anregung von Bewegungssensoren, - zum Beispiel ein Sensorpärchen das über derselben Schiene platziert ist -, lässt sich das Signal des einen Sensor durch das Signal des anderen schätzen. Das für diese Schätzung eingesetzte adaptive Filter liefert in diesem Fall eine Übertragungsfunktion (ÜTF), welche ein deutliches Maximum aufweist. Die zeitliche Position dieses Maximums in der Übertragungsfunktion (ÜTF) entspricht dann der Zeitverschiebung Δt zwischen den beiden Signalen. Aus dieser Zeitverschiebung lässt sich die Geschwindigkeit (Sensorabstand in Fahrtrichtung dividiert durch die Zeitverschiebung Δt) und die Fahrtrichtung (Vorzeichen der Zeitverschiebung) bestimmen. Die Berechnung der Übertragungsfunktion kann hier im Zeitbereich erfolgen. Geeignete bahntaugliche Rechnersysteme, wie spezielle Signalprozessoren, Microcontroller und Mikroprozessoren, sind kommerziell verfügbar.

Im Sinne der Erfindung ist unter dem Begriff Übertragungsfunktion (ÜTF) eine Filterfunktionalität zu verstehen, z.B. die Filterfunktion an sich bekannter nicht rekursiver Filter, eines FIR-Filter (Finite Impulse Response - Filter), welches das Signal des einen Sensors bestmöglich (im Sinne der kleinsten Fehlerquadratsumme) mittels des Signals eines anderen Sensors nachbildet. Bei der Analyse der Sensorsignale wird die zeitliche Position des Betragsmaximums in den Filterkoeffizienten zwischen den Sensorsignalen herangezogen.

Eine weitere Verbesserung kann durch Ermitteln einer gemeinsamen Übertragungsfunktion über mehrere Sensorpaare erreicht werden. Diese Ermittlung kann beispielsweise so erfolgen, dass bei einem Drehgestell mit 4 Achslagersensoren eine gemeinsame optimale Übertragungsfunktion (ÜTF) berechnet wird, indem die folgenden 4 Übertragungswege erfasst werden: Achse 1-rechts nach Achse 2-rechts (vorwärts ÜTF); Achse 2-rechts nach Achse 1-rechts (rückwärts ÜTF); Achse 1-links nach Achse 2-links (vorwärts ÜTF); Achse 2-links nach Achse 1-links (rückwärts ÜTF). Bei den rückwärts-ÜTF wird der zeitliche Verlauf invertiert, damit sich die 4 Übertragungsfunktionen konstruktiv überlagern. Dieses Verfahren kann auf beliebig viele Übertragungspfade erweitert werden, wodurch sich sowohl die Bestimmungsrate als auch die Genauigkeit erhöht. Auf diese Weise konnte in einer Erprobung der Erfindung auf einer Lokomotive eine zuverlässige Geschwindigkeitsbestimmung mit einer Bestimmungsrate von 1s und einer Genauigkeit von 0,2 m/s erreicht werden.

Die Erfindung betrifft auch eine Vorrichtung zur Ermittlung der Absolutgeschwindigkeit eines Schienenfahrzeugs, aufweisen:
- eine erste Sensoreinrichtung, welche einem vorlaufenden Radsatz des Schienenfahrzeugs zugeordnet ist, und zumindest eine weitere Sensoreinrichtung, welche einem nachlaufenden Radsatz des Schienenfahrzeug zugeordnet ist, und jede dieser Sensoreinrichtungen dazu ausgebildet ist, Unebenheiten der Schiene zu erfassen;
- eine Signalverarbeitungs-Einrichtung, der die Signale der einzelnen Sensoreinrichtungen zugeleitet sind, wobei die Signalverarbeitungs-Einrichtung dazu ausgebildet ist, eine Analyse der Sensorsignale durchzuführen und daraus mit Hilfe eines adaptiven FIR-Filters (Finite Impulse Response-Filters) die Absolutgeschwindigkeit zu ermitteln, wobei hierfür die zeitliche Position des Betrags-Maximum in den Filterkoeffizienten der geschätzten Übertragungsfunktionen zwischen den Sensorsignalen verwendet wird.

### Kurzbeschreibung der Zeichnungen

Zur weiteren Erläuterung der Erfindung wird im nachfolgenden Teil der Beschreibung auf die Zeichnungen Bezug genommen, aus denen weitere vorteilhafte Ausgestaltungen, Einzelheiten und Weiterbildungen der Erfindung, anhand nicht einschränkender Ausführungsbeispiele zu entnehmen sind.

Es zeigen:
- Figur 1: eine schematische Darstellung eines Drehgestells mit einem vorlaufenden und einem nachlaufenden Radsatz von der Seite gesehen, wobei im dargestellten Ausführungsbeispiel die Sensoreinrichtungen auf den Achslagern angeordnet sind;
- Figur 2: ein erstes Anregungssignal als Funktion der Zeit, gemessen am vorlaufenden Radsatz der Figur 1;
- Figur 3: ein zweites Anregungssignal als Funktion der Zeit, gemessen am nachlaufenden Radsatz der Figur 1;
- Figur 4: ein Ausführungsbeispiel der Erfindung, bei der auf einem Drehgestell die Sensoreinrichtung auf dem Drehgestellrahmen oberhalb der Primärfeder der Achslager der Radsätze angeordnet ist;
- Figur 5: ein weiteres Ausführungsbeispiel der Erfindung, bei der die Messposition im Wagenkasten jeweils oberhalb der Drehgestell-Mitte platziert ist, wobei für die Ermittlung der Absolutgeschwindigkeit mehrere dieser Messeinrichtungen berücksichtigt werden.

### Ausführung der Erfindung

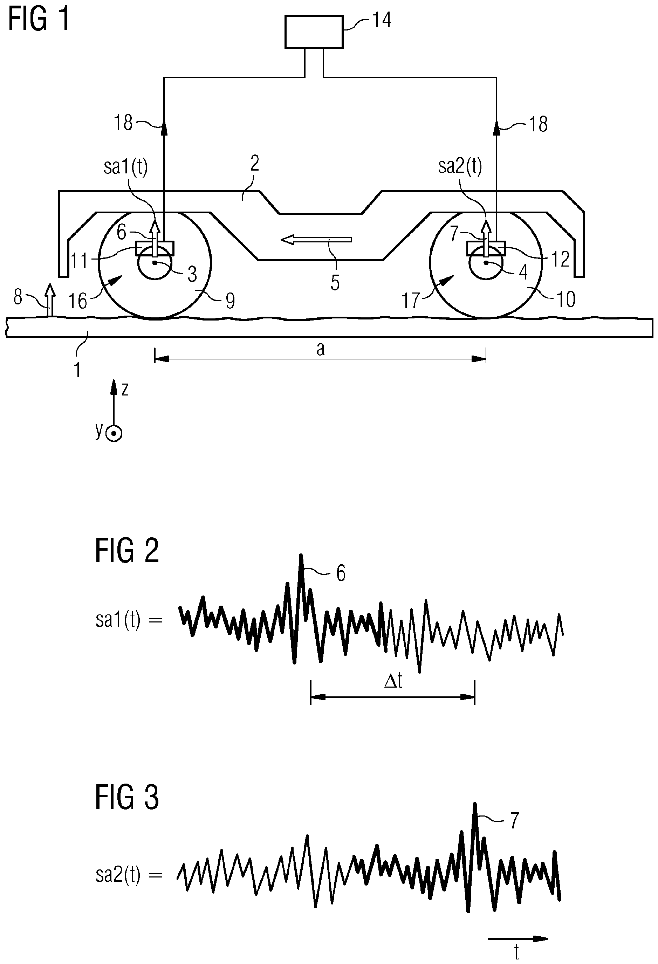

Figur 1 zeigt in einer vereinfachten Darstellung ein Drehgestell 2 eines nicht näher dargestellten Schienenfahrzeugs. Auf einem in Fahrtrichtung vorne liegenden Radsatz 16 und auf einem nachlaufenden Radsatz 17 sind jeweils paarweise Räder 9, 10 angeordnet. Die Radsätze haben zueinander einen Achsenabstand "a". Wie in Figur 1 überzeichnet dargestellt, ist die Lauffläche der Schiene 1 uneben. In Figur 1 geht die Fahrtrichtung von rechts nach links. Wenn also das vordere Rad 9 über eine Unebenheit fährt, folgt das nachlaufende Rad zeitlich versetzt. Die Unebenheiten verursachen Vibrations-Anregungen, die messtechnisch ausgewertet werden. Wie in Figur 1 angedeutet, ist jedem Achslager eine Sensoreinrichtung zugeordnet: der vorderen Achse die Sensoreinrichtung 11, der hinteren Achse die Sensoreinrichtung 12. Diese Sensoreinrichtungen 11, 12 können je nach Ausführung richtungsabhängig unterschiedliche physikalische Parameter abbilden, z.B.: Weg, Geschwindigkeit, Beschleunigung, bzw. davon abgeleitete Größen, wie deren Differenzial oder Integral. Bezüglich des Schienenstrangs ist unter z-Richtung eine vertikale Richtung zu verstehen, mit y-Richtung eine laterale Richtung. Beide Sensoreinrichtungen erzeugen jeweils ein Sensorsignal 18, welches einer Signalverarbeitungs- und Auswerteeinrichtung 14 zugeleitet ist. Im Wesentlichen besteht diese aus einem bahntauglichen digitalen Prozessorsystem. Ein auf diesem Prozessorsystem ablauffähiger Algorithmus ermittelt die Ähnlichkeit aus den beiden zeitlich aufeinanderfolgenden Sensorsignalen 18. Im vorliegenden Beispiel ist dies ein Algorithmus zur Berechnung der Übertagungsfunktion (ÜTF) mittels eines adaptiven Filters, wobei die Berechnung im Zeitbereich erfolgen kann. Ein FIR-Filter bildet dabei das Signal des einen Sensors bestmöglich mittels des Signals eines anderen Sensors nach, in dem die kleinste Fehlerquadratsumme gebildet wird. Das Vergleichsergebnis ist die gesuchte zeitliche Verzögerung Δt (siehe Figur 2 und Figur 3).

Figur 2 und Figur 3 zeigen beispielhaft die aus Unebenheiten zwischen der Schiene herrührenden Messesignale als Funktion der Zeit: am vorderen Rad 3 wird das Anregungssignal 6 (Signalmuster "sa1(t)" in Figur 2) gemessen, am hinteren Rad 4 das Anregungssignal 7 (Signalmuster "sa2(t)" in Figur 3). Beide Signale 6, 7 sind in ihrem zeitlichen Verlauf ähnlich, im Wesentlichen um ein Intervall Δt verschoben. Steht diese zeitliche Verzögerung Δt nach der Auswertung der Ähnlichkeit fest, so lässt sich unter Heranziehung des bekannten Abstandes "a" zwischen den Achsen 3, 4 der Räder 9, 10 die tatsächliche Geschwindigkeit des Schienenfahrzeugs sehr leicht durch Auswertung der Beziehung v= a / Δt ermitteln (v... Absolutgeschwindigkeit; a ... Achsenabstand; Δt ... Zeitverzögerung).

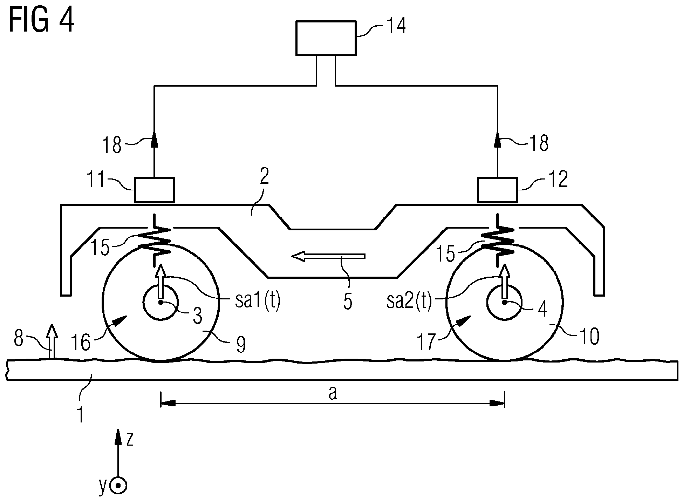

Figur 4 zeigt eine Ausführungsform der Erfindung, bei der auf einem Drehgestell 2 die Sensoren 11, 12 örtlich über der Primär-Federstufe 15 platziert sind. Das Prinzip ist wie zuvor dargestellt. Die von den beiden Sensoren 11, 12 ermittelten Anregungssignale (in Figur 2 und Figur 3 Signalmuster "sa1(t)" und "sa2(t)") werden jeweils als Signal 18 der Signalerfassungs- und Auswerteeinrichtung 14 zugeleitet, die wiederum die zeitliche Verzögerung Δt ermittelt und mit der oben angegebenen Beziehung die tatsächliche Geschwindigkeit des Schienenfahrzeugs berechnet.

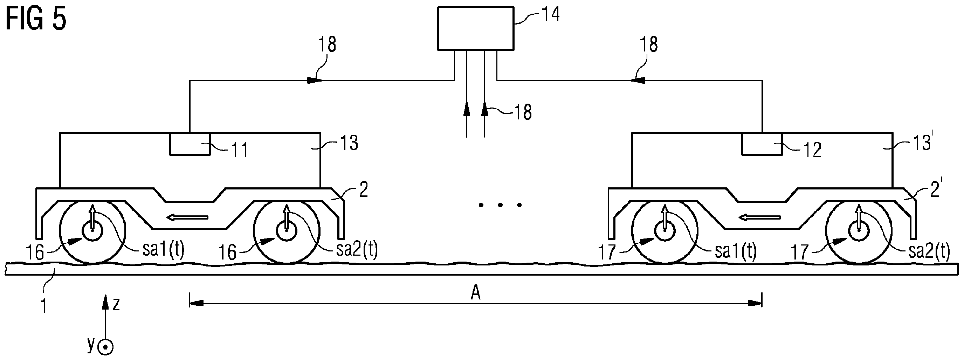

Figur 5 zeigt ein anderes Ausführungsbeispiel der Erfindung. Hier sind die beiden Sensoreinrichtungen 11 und 12 jeweils in einem Wagenkasten 13 angeordnet, wobei sich jeder dieser Wagenkästen 13 auf einem vorderen Drehgestell 2 und einem hinteren Drehgestell 2' befindet. Zwischen diesen beiden Drehgestellen 2,2' können im Schienenzug weitere Drehgestelle angeordnet sein. Jedes der von den Messeinrichtungen 11 und 12 erzeugten Signale 18 sind wieder einer Signalerfassungs- und Auswerteeinrichtung 14 zugeleitet. Diese ermittelt nun wieder mittels des bereits oben erwähnten Algorithmus zur Signalanalyse die zeitliche Verzögerung Δt zwischen den Signalen 6,7. Im Unterschied zu der Darstellung in Figur 1 und 4 wird im vorliegenden Beispiel der Abstand "A" zwischen den beiden Drehgestellen 2,2' für die Ermittlung der Absolutgeschwindigkeit v herangezogen.

### Zusammenstellung der verwendeten Bezugszeichen

- 1: Schiene
- 2,2': Drehgestell
- 3: vordere Radachse
- 4: hintere Radachse
- 5: Geschwindigkeit
- 6: Anregungssignal am vorlaufenden Rad
- 7: Anregungssignal am nachlaufenden Rad
- 8: Unebenheit der Schiene
- 9: Rad (vorlaufend)
- 10: Rad (nachlaufend)
- 11: Sensoreinrichtung
- 12: Sensoreinrichtung
- 13, 13': Wagenkasten
- 14: Signalverarbeitungs-Einrichtung
- 15: Primärfeder
- 16: vorlaufender Radsatz
- 17: nachlaufender Radsatz
- 18: Sensorsignal

- a: Achsenabstand
- A: Abstand zwischen aufeinanderfolgenden Drehgestellen
- Δt: Zeitintervall, Verzögerung
- v: Absolutgeschwindigkeit
- z: vertikale Richtung
- y: laterale Richtung

- ÜTF: Übertragungsfunktion

## Patentansprüche

1. Verfahren zur Ermittlung der Absolutgeschwindigkeit eines Schienenfahrzeugs, wobei bordseitig Sensoreinrichtungen (11, 12) und eine Signalverarbeitungs-Einrichtung (14) vorgesehen ist, umfassend folgende Verfahrensschritte:
a. Erfassen der Unebenheiten der Schiene (1) jeweils an einem vorlaufenden Radsatz (16) mittels einer ersten Sensoreinrichtung (11) und zumindest an einem nachlaufenden Radsatz (17) mittels einer weiteren Sensoreinrichtung (12);
b. Übermitteln der von den Sensoreinrichtungen (11, 12) erzeugten Sensorsignale (18) an eine Signalverarbeitungs-Einrichtung (14), welche dazu eingerichtet ist, durch eine Analyse der zugeleiteten Sensorsignale (18) mit Hilfe eines adaptiven FIR-Filters (Finite Impulse Response-Filters) die Absolutgeschwindigkeit zu ermitteln, wobei hierfür die zeitliche Position des Betragsmaximums in den Filterkoeffizienten der geschätzten Übertragungsfunktionen (ÜTF) zwischen den Sensorsignalen verwendet wird.

2. Verfahren nach Anspruch 1, **dadurch gekennzeichnet, dass** Sensoreinrichtungen (11, 12) verwendet werden, die dazu ausgebildet sind, in einer z- (vertikal) oder y-(lateral) Richtung einen Weg, eine Geschwindigkeit oder eine Beschleunigung, oder jeweils deren Differenzial oder Integral zu erfassen.

3. Verfahren nach Anspruch 1 oder 2, **dadurch gekennzeichnet, dass** die zumindest zwei Sensoreinrichtungen (11, 12) jeweils an aufeinanderfolgenden Achslagern von unterschiedlichen Radsätzen angeordnet werden.

4. Verfahren nach Anspruch 1 oder 2, **dadurch gekennzeichnet, dass** die Sensoreinrichtung dazu eingerichtet ist, Unebenheiten der einen und der anderen Schiene (1) oder über beiden Schienen gleichzeitig mittels Achslagersensoren zu erfassen.

5. Verfahren nach Anspruch 2, **dadurch gekennzeichnet, dass** die Sensoreinrichtung (11, 12) verwendet werden, die jeweils oberhalb einer zugeordneten Primärfeder (15) angeordnet sind.

6. Verfahren nach Anspruch 2, **dadurch gekennzeichnet, dass** die Sensoreinrichtungen (11) auf mehreren hintereinander fahrenden Drehgestellen angeordnet werden, wobei zur Ermittlung der Absolutgeschwindigkeit Sensorsignale (18) vorlaufender Radsätze (16) und nachlaufender Radsätze (17) verwendet werden.

7. Verfahren nach Anspruch 1, **dadurch gekennzeichnet**, die Sensoreinrichtungen (11,12) auf mehreren Drehgestellen (2,2') eines Schienenfahrzeugs angeordnet sind, und dass zur Ermittlung der Absolutgeschwindigkeit eine Kombination von mehreren Drehgestell-Pärchen (13, 13') (Figur 5) herangezogen wird.

8. Verfahren nach einem der vorstehenden Ansprüche, **dadurch gekennzeichnet, dass** die Signalverarbeitungs-Einrichtung (14) ein digitales Rechnersystem ist, welches mittels adaptiver Filter aus den zugeleiteten Sensorsignalen (18) die Übertragungsfunktionen (ÜTF) berechnet und aus der zeitlichen Position des Maximums in dem Verlauf der Filterkoeffizienten die Absolutgeschwindigkeit ermittelt.

9. Verfahren nach Anspruch 8, **dadurch gekennzeichnet, dass** die Signalverarbeitungs-Einrichtung (14) bei der Bestimmung der Übertragungsfunktionen (ÜTF) Sensorsignale (18) mehrere Sensorpaare berücksichtigt.

10. Vorrichtung zur Ermittlung der Absolutgeschwindigkeit eines Schienenfahrzeugs, umfassend:
a. eine erste Sensoreinrichtung (11) welche einem vorlaufenden Radsatz (16) des Schienenfahrzeugs zugeordnet ist, und zumindest eine weitere Sensoreinrichtung (12), welche einem nachlaufenden Radsatz (17) des Schienenfahrzeugs zugeordnet ist, und jede dieser Sensoreinrichtungen (11, 12) dazu ausgebildet ist, Unebenheiten der Schiene (1) zu erfassen;
b. eine Signalverarbeitungs-Einrichtung (14), der die Sensorsignale (18) der einzelnen Sensoreinrichtungen (11, 12) zugeleitet sind, wobei die Signalverarbeitungs-Einrichtung (14) dazu ausgebildet ist, eine Analyse der Sensorsignale (18) durchzuführen und daraus mit Hilfe eines adaptiven FIR-Filters (Finite Impulse Response-Filters) die Absolutgeschwindigkeit zu ermitteln, wobei hierfür die zeitliche Position des Betragsmaximums in den Filterkoeffizienten der geschätzten Übertragungsfunktionen (ÜTF) zwischen den Sensorsignalen verwendet wird.

11. Vorrichtung nach Anspruch 10, **dadurch gekennzeichnet, dass** die Sensoreinrichtungen (11, 12) dazu ausgebildet sind, in einer z- (vertikal) oder y-(lateral) Richtung einen Weg, eine Geschwindigkeit oder eine Beschleunigung, oder jeweils deren Differenzial oder Integral zu erfassen.

12. Vorrichtung nach Anspruch 10, **dadurch gekennzeichnet, dass** die zumindest zwei Sensoreinrichtungen (11, 12) jeweils durch AchslagerSensoren, die an unterschiedlichen Radsätzen (16,17) angeordnet sind, gebildet sind.

13. Vorrichtung nach Anspruch 10, **dadurch gekennzeichnet, dass** zumindest zwei Sensoreinrichtungen (11,12) jeweils an aufeinanderfolgenden Achslagern von unterschiedlichen Radsätzen (16,17) angeordnet sind.

14. Vorrichtung nach Anspruch 10, **dadurch gekennzeichnet, dass** das Schienenfahrzeug mehrere Drehgestelle (2,2') aufweist, wobei die Sensoreinrichtungen (11,12) auf mehreren dieser Drehgestelle (2,2') angeordnet sind und jedes Sensorsignal (18) der Signalverarbeitungs-Einrichtung (14) zugeführt ist.

15. Vorrichtung nach einem der Ansprüche 10-14, **dadurch gekennzeichnet, dass** die Signalverarbeitungs-Einrichtung (14) ein digitales Rechnersystem ist, welches mittels adaptiven Filter aus den zugeleiteten Sensorsignalen die Übertragungsfunktionen berechnet und daraus die Absolutgeschwindigkeit ermittelt.

16. Vorrichtung nach Anspruch 15, **dadurch gekennzeichnet, dass** die Signalverarbeitungs-Einrichtung (14) zur Bestimmung der Übertragungsfunktionen Sensorsignale (18) mehrere Sensorpaare berücksichtigt.

## Claims

1. Method for determining the absolute speed of a rail vehicle, sensor devices (11, 12) and a signal processing device (14) being provided on board, comprising the following method steps:
a. detecting the unevennesses of the rail (1), in each case, at a leading wheelset (16) by means of a first sensor device (11) and at least at a following wheelset (17) by means of a further sensor device (12);
b. transmission of the sensor signals (18) generated by the sensor devices (11, 12) to a signal processing device (14) that is configured to determine, by means of an analysis of the sensor signals (18) supplied, with the aid of an adaptive FIR filter (Finite Impulse Response Filter), the absolute speed wherein, for this purpose, the temporal position of the value maximum in the filter coefficients of the estimated transfer functions (UTF) between the sensor signals is used.

2. Method according to claim 1, **characterised in that** sensor devices (11, 12) are used which are configured to detect a displacement, a speed or an acceleration in a z (vertical) direction or a y (lateral) direction, or their respective differential or integral.

3. Method according to claim 1 or 2, **characterised in that** the at least two sensor devices (11, 12) are respectively arranged on successive axle boxes of different wheelsets.

4. Method according to claim 1 or 2, **characterised in that** the sensor device is configured to detect unevennesses of one and the other rail (1) or over both rails simultaneously by means of axle box sensors.

5. Method according to claim 2, **characterised in that** the sensor devices (11, 12) are used, which are each arranged over an associated primary spring (15).

6. Method according to claim 2, **characterised in that** the sensor devices (11) are arranged on a plurality of wheel trucks traveling one behind the other, wherein in order to determine the absolute speed, sensor signals (18) of leading wheelsets (16) and following wheelsets (17) are used.

7. Method according to claim 1, **characterised in that** the sensor devices (11, 12) are arranged on a plurality of wheel trucks (2, 2') of a rail vehicle, and **in that** in order to determine the absolute speed, a combination of a plurality of wheel truck pairs (13, 13') (Fig. 5) is used.

8. Method according to one of the preceding claims, **characterised in that** the signal processing device (14) is a digital computer system which calculates the transfer functions (UTF) by means of adaptive filters, from the sensor signals (18) fed in and from the temporal position of the maximum in the shape of the filter coefficients, determines the absolute speed.

9. Method according to claim 8, **characterised in that** during the determination of the transfer functions (UTF), the signal processing device (14) takes account of sensor signals (18) of a plurality of sensor pairs.

10. Device for determining the absolute speed of a rail vehicle, comprising:
a. a first sensor device (11) which is associated with a leading wheelset (16) of the rail vehicle, and at least one further sensor device (12) which is associated with a following wheelset (17) of the rail vehicle, and each of these sensor devices (11, 12) is configured to detect unevennesses of the rail (1);
b. a signal processing device (14) to which the sensor signals (18) of the individual sensor devices (11, 12) are fed, the signal processing device (14) being configured to carry out an analysis of the sensor signals (18) and therefrom, with the aid of an adaptive FIR filter (Finite Impulse Response Filter), to determine the absolute speed wherein, for this purpose, the temporal position of the value maximum in the filter coefficients of the estimated transfer functions (UTF) between the sensor signals is used.

11. Device according to claim 10, **characterised in that** sensor devices (11, 12) are configured to detect a displacement, a speed or an acceleration in a z (vertical) direction or a y (lateral) direction, or their respective differential or integral.

12. Device according to claim 10, **characterised in that** the at least two sensor devices (11, 12) are each formed by axle box sensors which are arranged on different wheelsets (16, 17) .

13. Device according to claim 10, **characterised in that** at least two sensor devices (11, 12) are respectively arranged on successive axle boxes of different wheelsets (16, 17).

14. Device according to claim 10, **characterised in that** the rail vehicle comprises a plurality of wheel trucks (2, 2'), the sensor devices (11, 12) being arranged on a plurality of these wheel trucks (2, 2') and each sensor signal (18) being fed to the signal processing device (14).

15. Device according to one of claims 10-14, **characterised in that** the signal processing device (14) is a digital computer system which calculates, by means of adaptive filters, from the sensor signals fed to it, the transfer functions and therefrom determines the absolute speed.

16. Device according to claim 15, **characterised in that** in order to determine the transfer functions, the signal processing device (14) takes account of sensor signals (18) of a plurality of sensor pairs.

## Revendications

1. Procédé de détermination de la vitesse absolue d'un véhicule ferroviaire, des moyens capteurs (11, 12) et une unité de traitement de signaux (14) étant prévus côté bord, comprenant les étapes de procédé suivantes :
a. détection des déformations du rail (1) sur un train de roues avant (16) au moyen d'un premier moyen capteur (11) et au moins sur un train de roues arrière (17) au moyen d'un second moyen capteur (12) ;
b. transmission des signaux de capteur (18) générés par les moyens capteurs (11, 12) à une unité de traitement de signaux (14) agencée pour déterminer la vitesse absolue en analysant les signaux de capteur (18) transmis, grâce à un filtre adaptatif FIR (Finite Impulse Response Filter), la position temporelle du montant maximum dans les coefficients de filtrage des fonctions de transmission (ÜTF) estimées entre les signaux des capteurs étant utilisée à cet effet.

2. Procédé selon la revendication 1, **caractérisé en ce que** des moyens capteurs (11, 12) sont utilisés qui sont aptes à détecter, dans une direction z- (verticale) ou y-(latérale), soit une course, soit une vitesse soit une accélération ou leur différentielle ou intégrale chacune.

3. Procédé selon la revendication 1 ou 2, **caractérisé en ce que** les au moins deux moyens capteurs (11, 12) sont disposés sur des boîtes d'essieux successifs de différents trains de roues.

4. Procédé selon la revendication 1 ou 2, **caractérisé en ce que** le moyen capteur est apte à détecter les déformations de l'un et de l'autre rail (1) ou des deux rails en même temps à l'aide de capteurs de boîtes d'essieux.

5. Procédé selon la revendication 2, **caractérisé en ce qu'**on met en œuvre les moyens capteurs (11, 12) qui sont disposés au-dessus d'un ressort primaire associé (15) chacun.

6. Procédé selon la revendication 2, **caractérisé en ce que** les moyens capteurs (11) sont disposés sur une pluralité de bogies se déplaçant les unes après les autres, des signaux capteurs (18) provenant des trains de roues avant (16) et des trains de roues arrière (17) étant utilisés pour déterminer la vitesse absolue.

7. Procédé selon la revendication 1, **caractérisé en ce que** les moyens détecteurs (11, 12) sont disposés sur plusieurs bogies (2, 2') d'un véhicule ferroviaire, et **en ce que** pour déterminer la vitesse absolue, une combinaison de plusieurs paires de bogies (13, 13') est retenue (figure 5).

8. Procédé selon l'une des revendications précédentes, **caractérisé en ce que** l'unité de traitement de signaux (14) est un système informatique numérique calculant, grâce à des filtres adaptatifs, à partir des signaux de capteur transmis, les fonctions de transmission (ÜTF), déterminant la vitesse absolue à partir de la position temporelle du maximum dans l'évolution des coefficients de filtrage.

9. Procédé selon la revendication 8, **caractérisé en ce que** l'unité de traitement de signaux (14) prend en compte des signaux de capteurs (18) de plusieurs paires de capteurs pour déterminer les fonctions de transmission (ÜTF) .

10. Dispositif de détermination de la vitesse absolue d'un véhicule ferroviaire, comprenant :
a. un premier moyen capteur (11) associé à un train de roues avant (16) du véhicule ferroviaire, et au moins un deuxième moyen capteur (12) associé à un train de roues arrière (17) du véhicule ferroviaire, et chacun desdits moyens capteurs (11, 12) étant conçus pour détecter des déformations du rail (1) ;
b. une unité de traitement de signaux (14) à laquelle sont fournis les signaux de capteur (18) des différents moyens capteurs (11, 12), l'unité de traitement de signaux (14) étant conçue pour procéder à une analyse des signaux de capteur (18) et déterminer sur la base de celle-ci, à l'aide d'un filtre adaptatif FIR (Finite Impulse Response Filter), la vitesse absolue, la position temporelle du montant maximum dans les coefficients de filtrage des fonctions de transmission (ÜTF) estimées entre les signaux de capteur étant utilisée à cet effet.

11. Dispositif selon la revendication 10, **caractérisé en ce que** les moyens capteurs (11, 12) sont conçus pour détecter, dans une direction z- (verticale) ou y-(latérale), soit une course, soit une vitesse soit une accélération ou leur différentielle ou intégrale chacune.

12. Dispositif selon la revendication 10, **caractérisé en ce que** les au moins deux moyens capteurs (11, 12) sont chacun constitués par des capteurs de boîtes d'essieux disposés sur différents trains de roues (16, 17).

13. Dispositif selon la revendication 10, **caractérisé en ce qu'**au moins deux moyens capteurs (11, 12) sont disposés sur des boîtes d'essieux successives chacune de différents trains de roues (16, 17).

14. Dispositif selon la revendication 10, **caractérisé en ce que** le véhicule ferroviaire dispose de plusieurs bogies (2, 2'), les moyens capteurs (11, 12) étant disposés sur plusieurs de ces bogies (2, 2') et chaque signal de capteur (18) est fourni à l'unité de traitement de signaux (14) .

15. Dispositif selon l'une des revendications 10 à 14, **caractérisé en ce que** l'unité de traitement de signaux (14) est un système informatique numérique calculant, grâce à un filtre adaptatif, à partir des signaux de capteur transmis, les fonctions de transmission, déterminant la vitesse absolue sur la base de celles-ci.

16. Dispositif selon la revendication 15, **caractérisé en ce que** l'unité de traitement de signaux (14) prend en compte des signaux de capteur (18) de plusieurs paires de capteurs pour déterminer les fonctions de transmission.
